# EUROPÄISCHE PATENTSCHRIFT

(11) **EP 0 981 895 B1**
(45) Veröffentlichungstag und Bekanntmachung des Hinweises auf die Patenterteilung: **13.02.2002**
(21) Anmeldenummer: 98907801.9
(22) Anmeldetag: 23.03.1998
(51) Int. Cl.: H04N 1/06

(54) **SYSTEM ZUM BELICHTEN VON DRUCKPLATTEN UND DESSEN VERWENDUNG**
SYSTEM FOR EXPOSING PRINTING PLATES AND USE THEREOF
SYSTEME D'EXPOSITION DE PLANCHES D'IMPRESSION ET SON UTILISATION

(30) Priorität: 14.05.1997 CH 113297
(43) Veröffentlichungstag der Anmeldung: 01.03.2000
(73) Patentinhaber: Luescher, Ursula, 5616 Meisterschwanden (CH); Luescher, Hans, 5600 Lenzburg (CH)
(72) Erfinder: BERNER, Peter, CH-5102 Rupperswil (CH)
(74) Vertreter: EGLI-EUROPEAN PATENT ATTORNEYS
(86) Internationale Anmeldenummer: CH9800114
(87) Internationale Veröffentlichungsnummer: WO9852345

(56) Entgegenhaltungen:
- EP-A- 0 590 907
- GB-A- 2 073 986
- US-A- 4 479 133

## Beschreibung

Die Erfindung betrifft ein System zum Übertragen von Daten sowie die Verwendung dieses Systems, insbesondere zu der Belichtung von thermischen Druckplatten.

In der Druckereitechnik, insbesondere in der Offsetdrucktechnik, wird grundsätzlich zwischen dem analogen und dem digitalen Belichten von Druckplatten unterschieden:

Die auf einem Negativ- bzw. Positivfilm enthaltenen Daten, wie z.B. Bilder, Schriften oder Grafiken werden in einem Kopierraum oder einer Repetierkopiermaschine mittels einer Ultraviolett-Lichtquelle - in analoger Art und Weise - auf eine lichtempfindliche Druckplatte übertragen. Der Lichtquelle angepasst ist die Eigenschaft der lichtempfindlichen Schicht der Druckplatte, so dass sie z.B. bei 380 nm ein Empfindlichkeitsmaximum aufweist.

Der Bildbereich einer Druckplatte wird von einem oder mehreren Lasern - in digitaler Art und Weise - direkt beschrieben. Die Empfindlichkeit der Druckplatte hat ihr Maximum, entsprechend der Lichtquelle. Je nach der Wellenlänge des eingesetzten Lichtes spricht man bei sichtbarem Licht von Laserplatten und bei Infrarot-Licht mit z.B. 830 nm von Thermoplatten.

Thermoplatten gelten heute als besonders zukunftsträchtig. Diese vorbeschichteten, eloxierten Aluminiumplatten können sowohl analog als auch digital belichtet werden. Die maximale Empfindlichkeit der Platten ist z.B. mit 830 nm so gewählt, dass beim "Belichten" normales Tageslicht nicht störend wirkt. Oberhalb dieses Wertes fällt die Empfindlichkeit der Thermoplatten abrupt ab, so dass z.B. bei einer Wellenlänge von 880 nm nur noch ca. 10-15% der bei 800 nm gemessenen Empfindlichkeit erreicht werden. Erfahrungsgemäss ist zur Belichtung solcher Thermoplatten ein Energiebedarf von 170 mJ/cm² erforderlich. Die Verwendung von Thermoplatten macht aufwendige und daher teure Handlingsysteme, die das Belichten von lichtempfindlichen Platten unter Dunkelkammerbedingungen erlauben, überflüssig. Trotz der einfachen Handhabbarkeit garantieren die Thermoplatten, dank der anwendbaren Infrarot- bzw. Thermotechnologie, eine hohe Zuverlässigkeit. Inzwischen sind Thermoplatten im Handel, welche einerseits eine herkömmliche Positivverarbeitung mit wässeriger Entwicklung zulassen und welche sich andrerseits in der Druckmaschine wie herkömmliche, beschichtete Druckplatten verwenden lassen. Des Weiteren wächst mit der zunehmenden Digitalisierung des Druckereigewerbes das Bedürfnis nach einem digitalem Belichten von Druckplatten.

Zum Übertragen von Daten, wie z.B. Bildern, Schriften oder Grafiken, auf Datenträger wie z.B. Offset-Druckplatten, sind im Wesentlichen drei Belichtungs-Prinzipien bekannt.

Das Flachbett, als einfachstes System zum analogen Belichten von Druckplatten eignet sich nur bedingt zum digitalen Belichten derselben. Einerseits wächst der Aufwand der Führung eines Belichtungskopfes mit der Grösse der Druckplatte, andrerseits bleibt durch die verlangte Belichtungsgeschwindigkeit immer ein Teil des möglichen Verfahrweges des Belichtungssystems, wegen der notwendigen Anfahr- und Bremsrampen des Belichtungskopfes, ungenutzt.

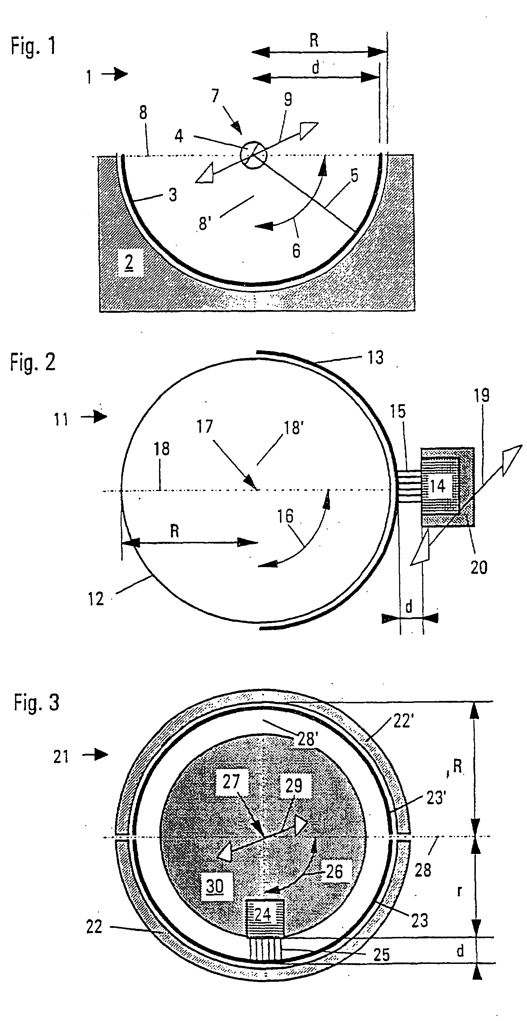

Ein an sich bekannter Innentrommelbelichter (siehe Fig. 1) weist folgende Vorteile auf: Die Plattengrösse kann unabhängig gewählt werden, da sich die Platte beim Belichten nicht bewegt. Die Platten lassen sich einfach in vorgesehene Passlöcher legen. Ein automatisches System zum Zu- und Wegführen der Platten lässt sich relativ einfach bewerkstelligen. Als Nachteile eines solchen Innentrommelbelichters müssen angeführt werden: Es muss mit einem besonders starken, frequenzverdoppelten YAG-Laser gearbeitet werden, wobei man aus dem Zentrum der Trommel einen einzigen Laserstrahl über die Platte rotieren lässt. Dies erschwert die Fokussierung wegen des grossen Abstandes und lässt kein Belichten mit Mehrfachstrahlen zu. Verwendet wird oft ein Polygonspiegel, der mit bis zu 30'000 U/min gedreht wird. Dies erfordert eine aufwendige Lagerung. Zudem wirken sich Fibrationen - sei es in der Umgebung des Gerätes oder innerhalb des Systems - extrem auf die erreichbare Auflösung auf.

Bei einem ebenfalls bekannten Aussentrommelbelichter (siehe Fig. 2) kann der Belichtungskopf bis auf wenige Millimeter an die Platte herangeführt werden, was den Einsatz wesentlich schwächerer und preiswerterer Laserdioden erlaubt. Diese lassen sich leichter fokussieren und als Mehrfachköpfe addieren, wobei Vorrichtungen mit wahlweise 256 oder 512 nebeneinander angeordneten Laserdioden bekannt sind. Diesen Vorteilen stehen folgende Nachteile gegenüber: Das sichere Festhalten der Platte auf der Trommel ist konstruktiv sehr aufwendig. Ein unerwünschtes Ablösen der Platte während dem Belichten kann nicht ausgeschlossen werden. Sollt sich dies aber ereignen, so muss mit erheblichen Schäden an der Maschine, insbesondere am Belichtungskopf, gerechnet werden. Die Drehzahl der Trommel ist auf ca. 100 U/min limitiert, womit sich eine Vergrösserung der zu belichtenden Fläche in wesentlichem Masse auf die Belichtungszeit auswirkt. Verschiedene Plattenformate ergeben eine unterschiedliche Gewichtsverteilung auf der Trommel, woraus sich im Routinebetrieb die Notwendigkeit eines automatischen Auswuchtens ergibt. Ein sicheres Einlegen der Platten in die Registerstifte ist sehr aufwendig, was die Automation dieses Vorganges einerseits praktisch erfordert, andrerseits hingegen erheblich erschwert.

Die Aufgabe der vorliegenden Erfindung besteht darin, ein Belichtungssystem vorzuschlagen, welches einerseits viele der individuellen Vorteile der bekannten Innen- und Aussentrommelbelichter kombiniert und zudem eine beträchtliche Zahl der Nachteile dieser Systeme eliminiert. Insbesondere sollen die beschrankenden Nachteile eines Anordnung nach der US-A-4479133 über wunden werden, damit es möglich ist, bei kleinem Abstand eine größere Anzahl von Lichtquellen in einer regelmässigen Anordnung einzusetzen.

Erfindungsgemäss wird diese Aufgabe entsprechend den Merkmalen des unabhängigen Anspruchs 1 gelöst, indem ein System vorgeschlagen wird, welches zum Übertragen von Daten auf plattenförmige Datenträger einen zumindest teilweise als Innenzylinder geformter Aufnehmer zum Anordnen der Datenträger - deren zur Aufnahme von Daten vorgesehene Seite der Zylinderachse des Aufnehmers zugewandt ist - und einen um diese Zylinderachse rotierbaren Übertragungskopf mit mindestens einem Übertragungsmittel - zum Übertragen der Daten auf den Datenträger - umfasst, wobei der Aufnehmer und der Übertragungskopf auch in Richtung der Zylinderachse relativ zueinander bewegbar sind und die Distanz zwischen zumindest einer Oberfläche des Übertragungskopfes bzw. Übertragungsmittels und dem Datenträger - während dem Übertragen von Daten - weniger als 1/4 des Aufnehmerdurchmessers beträgt. Das System ist dadurch gekennzeichnet, dass das Übertragungsmittel, zum Übertragen der Daten in Mehrstrahltechnik, ein Array von 24 bis 256 Lichtquellen, und der Übertragungskopf eine Optik zum Abbilden des Arrays von Lichtquellen auf den Datenträger umfassen. Des Weiteren wird eine Verwendung dieses System vorgeschlagen, wobei die Daten in Mehrstrahltechnik auf eine Thermo-Druckplatte übertragen werden können. Die bevorzugten Ausbildungen dieses Systems bzw. die bevorzugten Verwendungen desselben ergeben sich jeweils aus den abhängigen Ansprüchen.

Die erfindungsgemässe Vorrichtung wird im folgenden anhand von schematischen Zeichnungen diskutiert. Diese stellen lediglich eine bevorzugte Ausführungsform der Erfindung dar und sollen den Umfang dieser Erfindung keinesfalls einschränken. Es zeigen:
- Fig. 1: Einen Querschnitt durch ein Innentrommelbelichtungssystem (Stand der Technik);
- Fig. 2: Einen Querschnitt durch ein Aussentrommelbelichtungssystem (Stand der Technik);
- Fig. 3: Einen Querschnitt durch eine erste bevorzugte Ausführungsform eines erfindungsgemässen Innentrommelbelichtungssystems.

Fig. 1 zeigt ein an sich bekanntes Innentrommelbelichtungssystem 1 mit einem Aufnehmer 2 in zumindest teilweiser Zylinderform. In diesen Aufnehmer eingelegt ist eine Druckplatte 3, vorzugsweise eine Thermodruckplatte. Mittels eines rotierenden Übertragungsmittels 4, eines Prismas, wird ein Lichtstrahl 5 auf die Oberfläche der Druckplatte 3 gesandt. Das Prisma 4 ist in der Richtung 6 um die Zylinderachse 7, welche durch die Schnittlinie der Symmetrieebenen 8 bzw. 8' verläuft, rotierbar. Dadurch kann z.B. die ganze Breite der Druckplatte 3 mit dem Lichtstrahl bzw. Laserstrahl 5 überstrichen werden. Damit eine möglichst grosse Fläche der Platte 3 durch den Laserstrahl 5 getroffen werden kann, wird das Prisma in diesem Beispiel entlang der Zylinderachse 7 in der Richtung 9 bewegt. Die Platte 3 kann beispielsweise mittels Unterdruck im Aufnehmer 2 festgehalten werden, so dass die Platte ebenfalls eine im Wesentlichen zylindrische bzw. teilzylindrische Form einnimmt. So wird erreicht, dass diejenige Seite der Platte 3, auf welche Daten übertragen werden sollen, um einen praktisch konstanten Wert d vom Drehzentrum des Prismas 4 bzw. von der Zylinderachse 7 beabstandet ist. Entsprechend der verhältnismässig geringen Dikke der Platte 3 ist der Belichtungsabstand d fast gleich gross wie der Radius R des zylinderförmigen Aufnehmers 2 bzw. der Innentrommel.

Fig. 2 zeigt ein an sich bekanntes Aussentrommelbelichtungssystem 11 mit einem Aufnehmer 12 in zumindest teilweiser Zylinderform. Auf diesen Aufnehmer gelegt ist eine Druckplatte 13, vorzugsweise eine Thermodruckplatte. Mittels Übertragungsmitteln 14, welche Laserdioden umfassen, welche an einem Übertragungskopf 20 befestigt sind, werden Lichtstrahlen 15 auf die Oberfläche der Druckplatte 13 gesandt. Der Übertragungskopf 20 ist in der Richtung 17 entlang der Zylinderachse 19, welche durch die Schnittlinie der Symmetrieebenen 18 bzw. 18' verläuft, bewegbar. Dadurch kann z.B. die ganze Länge der Druckplatte 3 mit den Lichtstrahlen bzw. Laserstrahlen 15 überstrichen werden. Damit eine möglichst grosse Fläche der Platte 13 durch die Laserstrahlen 15 getroffen werden kann, ist der Aufnehmer bzw. die Aussentrommel 12 in diesem Beispiel um ihre Zylinderachse 17 in der Richtung 19 rotierbar. Die Platte 13 kann beispielsweise mittels Unterdruck und/ oder Klammern am Aufnehmer 12 festgehalten werden, so dass die Platte ebenfalls eine im Wesentlichen zylindrische bzw. teilzylindrische Form einnimmt. So wird erreicht, dass diejenige Seite der Platte 13, auf welche Daten übertragen werden sollen, um einen praktisch konstanten Wert d von der Oberfläche der Übertragungsmittel 14 bzw. vom Übertragungskopf 20 beabstandet ist. Entsprechend dem verhältnismässig grossen Durchmesser der Aussentrommel 12 ist der Belichtungsabstand d viel kleiner als der Radius R des zylinderförmigen Aufnehmers 12 bzw. der Aussentrommel.

Fig. 3 zeigt in einer schematisierten Querschnittsdarstellung eine erste bevorzugte Ausführungsform des erfindungsgemässen Innentrommelbelichtungssystems 21. In den Aufnehmer bzw. in die Trommel 22 ist eine Druckplatte 23, vorteilhafterweise eine Thermoplatte, eingelegt. Mittels eines Übertragungsmittels 24, welches Laserdioden umfasst und an einem Übertragungskopf 30 angeordnet sind, werden Lichtstrahlen 25 auf die Oberfläche der Druckplatte 23 gesandt. Das Übertragungsmittel umfasst ein Array, d.h. eine regelmässige Anordnung von 24 bis 256 Lichtquellen. Der Übertragungskopf 30 ist als Scheibe ausgebildet und in der Richtung 26 um die Zylinderachse 29, welche durch die Schnittlinie der Symmetrieebenen 28 bzw. 28' verläuft, rotierbar. Dadurch kann z.B. die ganze Breite der Druckplatte 23 mit den Lichtstrahlen bzw. Laserstrahlen 25 überstrichen werden. Der Übertragungskopf 30 ist zusätzlich in der Richtung 29 um die Zylinderachse 27, welche durch die Schnittlinie der Symmetrieebenen 28 bzw. 28' verläuft, bewegbar. Dadurch kann z.B. auch die ganze Länge der Druckplatte 23 mit den Lichtstrahlen bzw. Laserstrahlen 25 überstrichen werden. Die Platte 23 kann beispielsweise mittels Unterdruck im Aufnehmer 22 festgehalten werden, so dass die Platte ebenfalls eine im Wesentlichen zylindrische bzw. teilzylindrische Form einnimmt. So wird erreicht, dass diejenige Seite der Platte 23, auf welche Daten übertragen werden sollen, um einen praktisch konstanten Wert d von zumindest einer Oberfläche des Übertragungsmittels 24 bzw. des Übertragungskopfes 30 beabstandet ist. Entsprechend dem verhältnismässig grossen Durchmesser der Innentrommel 22 ist der Belichtungsabstand d viel kleiner als der Radius R des zylinderförmigen Aufnehmers 22 bzw. der Innentrommel. Erfindungsgemäss wird der Radius r des Übertragungskopfes 30 so gewählt, dass gilt: r > R/2. Damit wird erreicht, dass der Übertragungskopf 30 möglichst weit an die eingelegte, zu belichtende Platte 23 angenähert wird. Vorzugsweise beträgt der Belichtungsabstand d weniger als 1 cm.

Der Übertragungskopf 30 ist in Fig. 3 als massive Vorrichtung gezeichnet, es kann aber auch vorgesehen werden, dass eines oder mehrere der Übertragungsmittel 24 so verschiebbar abgeordnet sind, dass der Abstand r zwischen einer Oberfläche der Übertragungsmittel 24 und der Zylinderachse 27 variierbar ist. Auch kann die Form des Übertragungskopfes von derjenigen einer Scheibe abweichen, vorteilhaft ist jedoch immer, dass ein Auswuchten des Übertragungskopfes 30 möglich ist.

In einer Variante dieser Ausführungsform kann vorgesehen werden, dass der Aufnehmer bzw. die Innentrommel zwei Teilschalen 22 bzw. 22' umfasst. So kann die Innentrommel bis zu ihrem ganzen Umfang mit Laserlicht oder anderen zum Übertragen von Daten verwendeten Medien bzw. Strahlen bestrichen werden. Besonders geeignet sind dabei die gezeigten Halbschalen 22 bzw. 22', von denen eine oder beide auch ausserhalb des Datenübertragungssystems 21 mit einer Druckplatte 23 bzw. 23' beschickt werden können. Auf diese Art kann die Zeit zum Beschicken des Systems zusätzlich verkürzt werden. Anstelle des Unterdruckes zum Halten der Druckplatten werden auch andere Verfahren, wie z.B. die statische Aufladung von Platten 23 bzw. 23' und/oder Aufnehmer 22 bzw. 22' vorgeschlagen.

Wichtig ist, dass beim Übertragen von Daten die Übertragungsmittel 24 und die Oberfläche der zu belichtenden Druckplatte 23 so relativ zueinander bewegbar sind, dass der Belichtungsabstand d möglichst klein ist. Deshalb werden im folgenden weitere bevorzugte Ausführungsformen der Erfindung formuliert:
- Der Übertragungskopf 30 rotiert um die Zylinderachse 27 und die Innentrommel 22 ist entlang dieser Zylinderachse bewegbar;
- Der Übertragungskopf 30 ist entlang der Zylinderachse 27 bewegbar und die Innentrommel rotiert um diese Zylinderachse;
- Der Übertragungskopf 30 ist fixiert und die Innentrommel 22 ist sowohl entlang der Zylinderachse 27 bewegbar als auch um diese Zylinderachse rotierend, dabei kann der Übertragüngskopf an irgend einem Punkt des Übertragungssystems 21, beispielsweise an einer senkrecht zur Zylinderachse stehenden Ebene - allenfalls verschiebbar - auf einer Seite des Zylinders befestigt werden. Die Form eines solchen Übertragungskopfes kann von der einer runden Scheibe abweichen, weil nicht auf eine Auswuchtung geachtet werden muss. Ein solcher Übertragungskopf 30 bzw. die Übertragungsmittel 24 können auch nicht-zentrisch irgendwo im Inneren des zylindrischen oder teilzylindrischen Aufnehmers 22 angeordnet werden.

Eine Möglichkeit zur radialen Verschiebung des Übertragungskopfes 30 bzw. der Übertragungsmittel 24 zum Zwecke der Justierung des Belichtungsabstandes d wird bei allen Ausführungsformen bevorzugt, so dass eine hohe Auflösung der Datenübertragung und damit eine exzellente Bildqualität resultiert.

Als Übertragungsmittel werden Halbleiter-Laser in Form von Laser-Dioden bevorzugt. Andere auf der Halbleitertechnik beruhenden Laser, wie z.B. Laser-Transistoren, die zur Bildung von systematischen Verteilungen von Lichtquellen, sogenannten Arrays, eingesetzt werden können sind selbstverständlich ebenfalls vom Erfindungsgedanken erfasst.

Es hat sich als besonders vorteilhaft erwiesen, dass - im Falle der Verwendung von Laserdioden - alle Lasermodule und alle diesen zugeordneten elektrischen Leistungsteile auf dem Übertragungskopf 30 und um die Zylinderachse 29 des Aufnehmers 22, 22' rotierbar angeordnet sind. Diese Anordnung ermöglicht es, die elektrische Energie für den Betrieb der Laserdioden mit hoher Spannung und niedrigen Stromwerten über einen Schleifring auf den Übertragungskopf 30 zu führen und dort, in den elektrischen Leistungsteilen auf dem Übertragungskopf 30, in eine für die Laserdioden optimale niedrige Spannung bei hohem Strom umzuwandeln. Zudem ist es für den Betrieb der Laserdioden besonders vorteilhaft, wenn jede Laserdiode mit je einem Peltier-Element kühlbar verbunden ist, so dass eine konstante Betriebstemperatur eingehalten werden kann. Auf dem Übertragungskopf 30 können 24 bis 256 Laserdioden vorgesehen werden, die ihr Licht an je einen Lichtleiter, welcher so mit je einer Laserdiode zusammenwirkt, abgeben. In einer bevorzugten Ausführungsform sind auf dem Übertragungskopf 64 Laserdioden angeordnet. 64 als Lichtleiter wirkende Glasfaserkabel leiten die 64 individuellen Signale der 64 Laserdioden auf eine am Übertragungskopf 30 angeordnete Optik. Eine besonders bevorzugte Anordnung der Enden dieser Lichtleiter ist ein Array, in welchem diese als Lichtquellen wirkenden Lichtleiterenden in 8 Reihen angeordnet sind; durch diese Anordnung entsteht eine platzmässig optimale Verteilung der Lichtquellen und damit ein Array von 64 Lichtquellen mit einem minimalen Flächenbedarf. Mittels der Optik wird das Array von Lichtquellen auf dem Datenträger 23, 23', insbesondere auf einer Thermoplatte, entsprechend der Intensitätsverteilung der Laserdioden abgebildet. Damit durch Unterschiede in den Intensitätsmaxima der Laserdioden kein sogenanntes "Banding" bzw. ein unerwünschtes Streifenmuster auf dem Datenträger 23, 23' entsteht, kann mit dem erfindungsgemässen System die maximale Intensität jeder Laserdiode und damit auch jeder Lichtquelle vor oder auch während der Datenübertragung gemessen und darauf die maximalen Intensitäten aller Lichtquellen einander angeglichen werden. Dieses Messen und Angleichen kann automatisch erfolgen und hat den Vorteil, dass durch individuelles Altern der Laserdioden hevorgerufene Intensitätsschwankungen rechtzeitig korrigiert werden können.

Die erfindungsgemässe Anordnung (vergl. Fig. 3) ermöglicht zudem den Einsatz von einem oder auch mehreren Feststoff(= Rubidium-Laser) oder Gas-Lasern (= Neon-, YAG-Laser). Der Einsatz dieser Laser umfasst selbstverständlich das Anordnen von speziellen Lichtleitmitteln wie Spiegel und dergleichen.

Ermöglicht wird dieser Einsatz durch eine entsprechend massive und voluminöse Ausbildung des Übertragungskopfes 30.

Vorteile des erfindungsgemässen Übertragens von Daten auf Datenträger bzw. Belichtens von Thermoplatten umfassen:
- Die Vorteile des Innentrommelkonzeptes (unabhängige Plattengrösse, einfache Beschickung des Belichters, mögliche Automation der Plattenzuführung) werden mit den Vorteilen des Aussentrommelprinzps (Belichtungsabstand von wenigen Millimetern, Einsatz von Laserdioden) vereint, so dass in Mehrstrahltechnik - z.B. mittels Arrays von mit Laserdioden zusammenwirkenden Lichtleitern - ein geringer Abstand der Optik zur Platte realisiert werden kann.
- Die jüngste Generation von Thermoplatten kann im Innentrommelverfahren belichtet werden.
- Ein echtes Binärsystem ohne den sogenannten "PrePress-Punktzuwachs" ermöglicht eine hochgenaue Übertragung von Daten bzw. Reproduktion.
- Alle Arbeiten können bei Tageslicht ausgeführt werden.

In der vorliegenden Anmeldung wurde auf die exakte Beschreibung technischer Details, wie eine Computersteuerung des Belichtungssystems, die Übertragung der Daten auf drehbare Übertragungsmittel (beispielsweise mittels Lichtleitern) die elektrische Kontaktierung mittels Schleifkontakten im Interesse der Kürze der Anmeldung verzichtet. Das Lösen solcher Detailprobleme entspricht selbstverständlich dem Wissen und Können eines mit einer solchen Aufgabe betrauten Fachmanns.

## Patentansprüche

1. System (21) zum Übertragen von Daten auf plattenförmige Datenträger (23, 23'), welches einen zumindest teilweise als Innenzylinder geformten Aufnehmer (22, 22') zum Anordnen der Datenträger - deren zur Aufnahme von Daten vorgesehene Seite der Zylinderachse (29) des Aufnehmers zugewandt ist - und einen um diese Zylinderachse rotierbaren Übertragungskopf (30) mit mindestens einem Übertragungsmittel (24) - zum Übertragen der Daten auf den Datenträger (23) - umfasst, wobei der Aufnehmer (22, 22') und der Übertragungskopf (30) auch in Richtung der Zylinderachse (29) relativ zueinander bewegbar sind und die Distanz (d) zwischen zumindest einer Oberfläche des Übertragungskopfes (30) bzw. Übertragungsmittels (24) und dem Datenträger (23, 23') - während dem Übertragen von Daten - weniger als 1/4 des Aufnehmerdurchmessers beträgt, **dadurch gekennzeichnet, dass** das Übertragungsmittel (24), zum Übertragen der Daten in Mehrstrahltechnik, ein Array mit einer regelmässigen Anordnung von 24 bis 256 Lichtquellen, und der Übertragungskopf (30) eine Optik zum Abbilden des Arrays von Lichtquellen auf den Datenträger (23, 23') umfassen.

2. System (21) nach Anspruch 1, **dadurch gekennzeichnet, dass** die Distanz (d) zwischen zumindest einer Oberfläche des Übertragungskopfes (30) bzw. Übertragungsmittels (24) und dem Datenträger (23, 23') - während dem Ubertragen von Daten - weniger als 1 cm beträgt.

3. System (21) nach Anspruch 1 oder 2, **dadurch gekennzeichnet, dass** der Aufnehmer (22, 22') entlang seiner Zylinderachse (29) bewegbar angeordnet ist.

4. System (21) nach einem der vorhergehenden Ansprüche, **dadurch gekennzeichnet, dass** das Array 64 Lichtquellen umfasst.

5. System (21) nach Anspruch 4, **dadurch gekennzeichnet, dass** die 64 Lichtquellen in 8 Reihen angeordnet sind.

6. System (21) nach einem der vorhergehenden Ansprüche, **dadurch gekennzeichnet, dass** der Übertragungskopf (30) in Richtung der Zylinderachse (29) des Aufnehmers (22, 22') bewegbar angeordnet ist.

7. System (21) nach einem der vorhergehenden Ansprüche, **dadurch gekennzeichnet, dass** die Übertragungsmittel (24) Halbleiter-Laser, insbesondere Laserdioden, umfassen.

8. System (21) nach Anspruch 7, **dadurch gekennzeichnet, dass** die Lichtquellen durch Enden von Lichtleitern gebildet sind, welche mit je einer Laserdiode zusammenwirken.

9. System (21) nach Anspruch 7 oder 8, **dadurch gekennzeichnet, dass** jede Laserdiode mit je einem Peltier-Element kühlbar verbunden ist.

10. System (21) nach einem der Ansprüche 7 bis 9, **dadurch gekennzeichnet, dass** alle Lasermodule und alle diesen zugeordneten elektrischen Leistungsteile auf dem Übertragungskopf (30) und um die Zylinderachse (29) des Aufnehmers (22,22') rotierbar angeordnet sind.

11. Übertragung von Daten, unter Verwendung eines Systems nach einem oder mehreren der Ansprüche 1 bis 10, **dadurch gekennzeichnet, dass** die Daten in Mehrstrahltechnik auf einen Datenträger (23, 23') übertragen werden.

12. Übertragung von Daten nach Anspruch 11, **dadurch gekennzeichnet, dass** eine Druckplatte (23, 23') belichtet wird.

13. Übertragung von Daten nach Anspruch 11 oder 12, **dadurch gekennzeichnet, dass** eine Thermoplatte (23, 23') belichtet wird.

14. Übertragung von Daten nach einem der Ansprüche 11 bis 13, **dadurch gekennzeichnet, dass** die maximale Intensität jeder Lichtquelle vor oder während der Datenübertragung individuell gemessen wird.

15. Übertragung von Daten nach Anspruch 14, **dadurch gekennzeichnet, dass -** zum Vermeiden eines Bandings - die maximalen Intensitäten aller Lichtquellen einander angeglichen werden.

## Claims

1. System (21) for transferring data on plate-shaped data carriers (23, 23'), comprised of a receiver (22, 22') shaped at least partially as an inner cylinder for arranging the data carriers, whose side provided for receiving data faces the cylinder axis (29) of the receiver, and a transfer head (30) rotatable around this cylinder axis with at least one transfer means (24) for transferring the data to the data carrier (23), wherein the receiver (22, 22') and transfer head (30) can also be moved in the direction of the cylinder axis (29) relative to each other, and the distance (d) between at least one surface of the transfer head (30) or transfer means (24) and the data carrier (23, 23') measures less than ¼ of the receiver diameter during data transfer, **characterized in that** the transfer means (24) comprises an array with regular arrangement of 24 to 256 light sources for transferring data in multiple-beam technology, and the transfer head (30) has optics for imaging the array of light sources on the data carrier (23, 23').

2. System (21) according to claim 1, **characterized in that** the distance (d). between at least one surface of the transfer head (30) or transfer means (24) and the data carrier (23, 23') measures less than 1 cm during data transfer.

3. System (21) according to claim 1 or 2, **characterized in that** the receiver (22, 22') is arranged moveably along its cylinder axis (29).

4. System (21) according to one of the preceding claims, **characterized in that** the array encompasses 64 light sources.

5. System (21) according to claim 4, **characterized in that** the 64 light sources are arranged in 8 rows.

6. System (21) according to one of the preceding claims, **characterized in that** the transfer head (30) is arranged moveably in the direction of the cylinder axis (29) of the receiver (22, 22').

7. System (21) according to one of the preceding claims, **characterized in that** the transfer means (24) encompass semiconductor lasers, in particular laser diodes.

8. System (21) according to claim 7, **characterized in that** the light sources are comprised of ends of light sources that interact with one laser diode each.

9. System (21) according to claim 7 or 8, **characterized in that** each laser diode is coolably connected with one Peltier element each.

10. System (21) according to one of claims 7 to 9, **characterized in that** all laser modules and all electrical power circuits allocated to them are arranged on the transfer head (30) in such a way that they can rotate around the cylinder axis (29) of the receiver (22, 22').

11. Transfer of data using a system according to one or more of claims 1 to 10, **characterized in that** the data are transferred on a data carrier (23, 23') in multi-beam technology.

12. Transfer of data according to claim 11, **characterized in that** a printing plate (23, 23') is exposed.

13. Transfer of data according to claim 11 or 12, **characterized in that** a thermal plate (23, 23') is exposed.

14. Transfer of data according to one of claims 11 to 13, **characterized in that** the maximal intensity of each light source is individually measured before or during the data transfer.

15. Transfer of data according to claim 14, **characterized in that** the maximal intensities of all light sources are approximated to each other to prevent banding.

## Revendications

1. Système (21) pour la transmission de données sur des supports de données (23, 23') en forme de plaques, qui comprend un capteur (22, 22') réalisé au moins en partie sous la forme d'un cylindre interne pour l'agencement des supports de données - dont le côté prévu pour l'enregistrement des données est orienté vers l'axe cylindrique (29) du capteur - et une tête de transmission (30) rotative autour de cet axe cylindrique comprenant au moins un moyen de transmission (24) - pour la transmission des données sur les supports de données (23) -, dans lequel le capteur (22, 22') et la tête de transmission (30) sont mobiles l'un par rapport à l'autre également dans la direction de l'axe cylindrique (29) et la distance (d) entre au moins une surface de la tête de transmission (30), respectivement du moyen de transmission (24) et les supports de données (23, 23') - au cours de la transmission de données - représente moins de 1/4 du diamètre du capteur, **caractérisé en ce que** le moyen de transmission (24), pour la transmission des données dans la technique à plusieurs faisceaux, comprend une matrice avec un agencement régulier de 24 à 256 sources lumineuses et la tête de transmission (30) comprend une optique pour la reproduction de la matrice des sources lumineuses sur le support de données (23, 23').

2. Système (21) selon la revendication 1, **caractérisé en ce que** la distance (d) entre au moins une surface de la tête de transmission (30), respectivement du moyen de transmission (24) et les supports de données (23, 23') - au cours de la transmission de données - représente moins de 1 cm.

3. Système (21) selon la revendication 1 ou 2, **caractérisé en ce que** le capteur (22, 22') est disposé de façon à pouvoir se déplacer le long de son axe cylindrique (29).

4. Système (21) selon l'une quelconque des revendications précédentes, **caractérisé en ce que** la matrice comprend 64 sources lumineuses.

5. Système (21) selon la revendication 4, **caractérisé en ce que** les 64 sources lumineuses sont disposées en 8 rangs.

6. Système (21) selon l'une quelconque des revendications précédentes, **caractérisé en ce que** la tête de transmission (30) est disposée de façon à pouvoir se déplacer le long de l'axe cylindrique (29) du capteur (22, 22').

7. Système (21) selon l'une quelconque des revendications précédentes, **caractérisé en ce que** les moyens de transmission (24) comprennent des lasers à semi-conducteurs, en particulier des diodes lasers.

8. Système (21) selon la revendication 7, **caractérisé en ce que** les sources lumineuses sont formées par des extrémités de câbles fibres optiques qui coopèrent respectivement avec une diode laser.

9. Système (21) selon la revendication 7 ou 8, **caractérisé en ce que** chaque diode laser est reliée, de manière à pouvoir être refroidie, à un élément Peltier.

10. Système (21) selon l'une quelconque des revendications 7 à 9, **caractérisé en ce que** tous les modules lasers et tous les éléments de puissance électrique correspondant sont disposés sur la tête de transmission (30) et en rotation autour de l'axe cylindrique (29) du capteur (22, 22').

11. Transmission de données, en utilisant un système selon une ou plusieurs des revendications 1 à 10, **caractérisée en ce que** les données sont transmises dans une technique à plusieurs faisceaux sur un support de données (23, 23').

12. Transmission de données selon la revendication 11, **caractérisée en ce qu'**un cliché (23, 23') est exposé.

13. Transmission de données selon la revendication 11 ou 12, **caractérisée en ce qu'**un cliché thermosensible (23, 23') est exposé.

14. Transmission de données selon l'une quelconque des revendications 11 à 13, **caractérisée en ce que** l'intensité maximale de chaque source lumineuse est mesurée de manière individuelle avant ou pendant la transmission de données.

15. Transmission de données selon la revendication 14, **caractérisée en ce que** - pour éviter un "banding" - on compense les intensités maximales de toutes les sources lumineuses l'une par rapport à l'autre.
